# DEMANDE DE BREVET EUROPEEN

(11) **EP 4 703 211 A1**
(43) Date de publication de la demande: **04.03.2026**
(21) Numéro de dépôt: 24382929.8
(22) Date de dépôt: 29.08.2024
(51) Int. Cl.: B60R 16/02, F16L 5/10, H01B 17/58, H02G 3/22, H02G 15/013

(54) **PASSE-CLOISON POUR AU MOINS UN CÂBLE ET/OU TUYAU**

(71) Demandeur: Catelsa-Caceres SAU, 10005 Caceres (ES)
(72) Inventeur: PAREDES, Ruben, 10005 Caceres (ES); JIMENEZ, Juan Luis, 10005 Caceres (ES); DEHAM, Olivier, 10005 Caceres (ES)
(74) Mandataire: Gevers & Orès

(57) **Abrégé**

Passe-cloison (10) pour au moins un câble et/ou tuyau comportant :
- un support (12) à base élastomère comprenant un plateau (16) qui est muni d'un orifice (18) de passage pour ledit au moins un câble et/ou tuyau ; et
- un contre-support (14), plus rigide que le support, se présentant sous la forme d'au moins deux parties (14', 14") s'étendant à partir du plateau dudit support selon une direction (X) sensiblement perpendiculaire audit plateau et agencées autour de l'orifice de passage, chacune desdites parties présentant au moins une extrémité latérale (15), qui est reliée à l'extrémité latérale qui lui est la plus proche d'une autre partie du contre-support par une languette (20) appartenant au support.

## Description

### Domaine technique de l'invention

La présente invention concerne un passe-cloison pour au moins un câble et/ou tuyau destiné à traverser une cloison, en particulier pour une application dans le secteur automobile, aéronautique ou ferroviaire par exemple. L'invention concerne également un procédé d'installation d'au moins un câble et/ou tuyau dans ce passe-cloison.

### Arrière-plan technologique

Dans de nombreux secteurs comme par exemple l'automobile, l'aéronautique ou le ferroviaire, l'usage d'électronique connecté par des câbles électriques et/ou l'usage de tuyaux pour fluide est très répandu pour assurer les commandes des différents organes du véhicule ou appareil. Ces usages nécessitent généralement la traversée d'une structure compartimentée et donc d'au moins une cloison, en particulier à travers une lumière ménagée dans cette cloison. Cette traversée doit par exemple être étanche, tant à l'eau qu'à la circulation de particules - polluantes ou poussières - et être isolée acoustiquement pour éviter la propagation de bruits d'un compartiment à l'autre, et ainsi éviter des nuisances.

Classiquement, différents types de passes-cloison existent.

Une première catégorie propose un passe-cloison réalisé en un matériau souple et extensible permettant le passage de câbles et/ou tuyaux de différentes dimensions. Néanmoins, ce type de passe-cloison a le désavantage d'être difficile à monter mais facile à retirer de la structure sur laquelle il est installé alors qu'il est recherché que le passe-cloison reste en place dans la cloison pour maintenir le câble et/ou tuyau en place.

Une deuxième catégorie propose un passe-cloison comportant un support en matériau souple et un contre-support rigide assemblés ensemble, par exemple emboîtés. Ce genre de passe-cloison présente l'avantage d'être extensible pour le passage de câbles et/ou tuyaux et présente un effort de montage faible et un effort de démontage élevé. Autrement dit, cette deuxième catégorie de passe-cloison est facile à installer dans la cloison mais difficile à l'en retirer. Néanmoins, ce genre d'assemblage suppose une limitation de son extension, due à la limitation de l'espace d'extension par le contre-support rigide, durant le passage des différents câbles et/ou tuyaux à travers le passe-cloison. Ainsi, des connecteurs de câbles électriques peuvent présenter des dimensions supérieures au passage permis par le contre-support rigide, et donc ne peuvent passer par la passe-cloison. En outre, ce genre de passe-cloison présente aussi, en utilisation, un risque de dissociation entre le support et le contre-support, entraînant une baisse des performances précitées.

Aussi, un objectif de l'invention est de proposer un passe-cloison amélioré, permettant notamment une extension d'un contre-support rigide pour le passage d'au moins un élément de grande dimension, sans risque d'endommagement de celui-ci ou du passe-cloison.

### Résumé de l'invention

Il est donc proposé un passe-cloison pour au moins un câble et/ou tuyau comportant :
- un support à base élastomère comprenant un plateau qui est muni d'un orifice de passage pour l'au moins un câble et/ou tuyau ; et
- un contre-support, plus rigide que le support, se présentant sous la forme d'au moins deux parties s'étendant à partir du plateau du support selon une direction sensiblement perpendiculaire au plateau et agencées autour de l'orifice de passage, chacune des parties présentant au moins une extrémité latérale, qui est reliée à l'extrémité latérale qui lui est la plus proche d'une autre partie du contre-support par une languette appartenant au support.

Ainsi, grâce au passe-cloison selon l'invention, on assure une amélioration, en utilisation, de l'écartement des différentes parties du contre-support. En effet, la ou les languettes reliant les extrémités latérales d'une des parties du contre-support avec une autre sont aptes à se déformer avec l'étirement du support et ainsi entraîner le déplacement d'au moins une des parties du contre-support par rapport à une autre des parties. De la sorte, la zone de passage définie par le contre-support, plus rigide que le support, peut être agrandie pour le passage d'un élément dont les dimensions sont sensiblement supérieures à celles du contre-support pris dans un état initial, c'est-à-dire un état non sollicité.

Le passe-cloison, selon l'invention, peut comprendre une ou plusieurs des caractéristiques ci-dessous, prises isolément les unes avec les autres ou en combinaison les unes avec les autres :
- lesdites au moins deux parties du contre-support sont distinctes les unes des autres, chacune des parties distinctes présentant ainsi deux extrémités latérales, chacune de ces deux extrémités latérales étant reliée à l'extrémité latérale qui lui est la plus proche d'une autre partie du contre-support par une languette ;
- le contre-support se présente sous la forme d'une seule pièce ;
- le contre-support comporte au moins deux organes de clipsage s'étendant en saillie depuis une paroi radialement externe du contre-support, l'organe de clipsage étant logé dans une ouverture ménagée dans la paroi radialement externe ;
- chaque partie distincte du contre-support comporte au moins un organe de clipsage s'étendant en saillie depuis une paroi radialement externe de la partie, le organe de clipsage étant logé dans une ouverture ménagée dans la paroi radialement externe ;
- une membrane appartenant au support remplit l'ouverture ;
- le support à base élastomère est en un élastomère, un matériau thermoplastique élastomère ou un matériau thermoplastique élastomère vulcanisé ;
- le contre-support est en un matériau thermoplastique ou un matériau thermoplastique élastomère vulcanisé ;
- le plateau du support comporte au moins une lèvre périphérique destinée à prendre appui sur une surface d'une cloison externe au passe-cloison ;
- le contre-support est situé, selon la direction sensiblement perpendiculaire au plateau, entre le plateau du support et une jupe tronconique appartenant au support, la jupe tronconique, qui s'étend autour de l'orifice, comportant à une extrémité libre une deuxième lèvre destinée à prendre appui sur une surface d'une cloison externe au passe-cloison ;
- le contre-support est situé, selon la direction sensiblement perpendiculaire au plateau, entre le plateau du support et un renflement en forme de demi-tonneau, le renflement, qui s'étend autour dudit axe longitudinal, appartenant au support ;
- le support comporte au moins un col configuré pour maintenir ledit au moins un câble et/ou tuyau ;
- le col s'étend en saillie depuis le plateau selon la direction sensiblement perpendiculaire audit plateau ;
- le support et le contre-support sont liés entre eux par adhésion chimique.

L'invention concerne également un procédé d'installation d'au moins un câble et/ou tuyau dans un passe-cloison tel que décrit dans ce qui précède, ce procédé comprenant les étapes suivantes :
- étirer le support à base élastomère de sorte à écarter les parties du contre-support les unes des autres,
- insérer ledit au moins un câble et/ou tuyau au travers l'orifice de passage du support,
- refermer le support à base élastomère sur ledit câble et/ou tuyau, puis
- installer le passe-cloison, muni de l'au moins un câble et/ou tuyau dans une lumière d'une cloison prévue à cet effet.

Le procédé, selon l'invention, peut comprendre une ou plusieurs des caractéristiques ci-dessous, prises isolément les unes avec les autres ou en combinaison les unes avec les autres :
- après la fermeture du support mais avant l'installation du passe-cloison dans la cloison, enrouler un ruban autour du câble et/ou tuyau et d'au moins une partie du support à base élastomère, le câble et/ou tuyau et l'au moins une partie du support étant pris ensemble dans le ruban.

### Brève description des figures

L'invention sera mieux comprise à l'aide de la description qui va suivre, donnée uniquement à titre d'exemple et faite en se référant aux dessins annexés dans lesquels :
La figure 1 représente une vue schématique en perspective d'une forme de réalisation d'un passe-cloison selon l'invention,
La figure 2 représente une autre vue schématique de la figure 1,
La figure 3 représente une vue schématique en perspective d'une variante de la forme de réalisation de la figure 1,
La figure 4 représente une vue schématique en perspective d'une autre forme de réalisation du passe-cloison selon l'invention, en particulier lorsque le contre-support comporte deux parties distinctes
La figure 5 représente une vue schématique en perspective d'une variante de la forme de réalisation de la figure 1 à 4,
La figure 6 représente une vue très schématique du passe-cloison des figures 1 à 3 dans un état dit de repos ou initial,
La figure 7 représente une vue très schématique du passe-cloison des figures 1 à 3 dans un état dit déformé,
La figure 8 représente une vue très schématique du passe-cloison des figures 4 et 5 dans un état dit de repos ou initial,
La figure 9 représente une vue très schématique du passe-cloison des figures 4 et 5 dans un état dit déformé,
La figure 10 représente une vue schématique en perspective d'une autre forme de réalisation du passe-cloison selon l'invention, en particulier lorsque le contre-support comporte quatre parties distinctes,
La figure 11 représente une vue schématique en perspective d'une autre forme de réalisation du passe-cloison selon l'invention, en particulier lorsque la support comporte une jupe tronconique,
La figure 12 représente une vue schématique en perspective d'une autre forme de réalisation du passe-cloison selon l'invention, en particulier lorsque le support comporte un renflement,
La figure 13 représente une vue schématique du dessus du passe-cloison de la figure 12,
La figure 14 représente une vue schématique d'un détail du passe-cloison de la figure 12, en particulier en utilisation,
La figure 15 représente une vue schématique en perspective du passe-cloison de la figure 12 en utilisation,
La figure 16 représente une vue schématique en perspective d'une autre forme de réalisation du passe-cloison selon l'invention,
La figure 17 représente une vue schématique en perspective d'une autre forme de réalisation du passe-cloison selon l'invention.

Sur ces figures, une même référence correspond à des éléments identiques ou semblables.

### Description détaillée de l'invention

Dans ce qui suit il est question d'un exemple de passe-cloison 10 selon l'invention destiné à traverser une cloison S, cette cloison séparant deux compartiments d'une structure. À titre d'exemple, la cloison S peut séparer un habitacle d'un espace moteur dans un véhicule automobile.

Il sera également compris que le passe-cloison 10 selon l'invention est conçu pour le passage d'un ou plusieurs câbles pouvant être regroupés en un ou plusieurs faisceaux de câbles. On comprend qu'un faisceau de câbles regroupe plusieurs câbles. On comprend également par câble ou faisceau de câbles, le câble ou le faisceau de câbles avec le ou les connecteurs associés. On entend par connecteur, un dispositif par lequel le ou les câbles sont reliés à un équipement.

Il sera également compris qu'un câble peut être remplacé par un tuyau, et donc que le passe-cloison 10 est aussi conçu pour le passage d'un ou plusieurs tuyaux. Il sera encore compris que le passe-cloison 10 est conçu pour le passage d'au moins un câble et/ou d'au moins un tuyau.

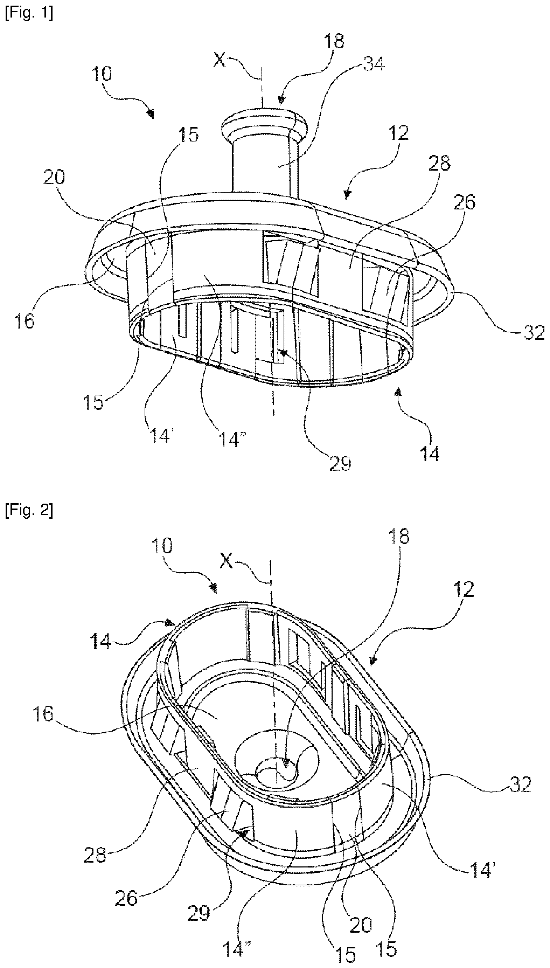

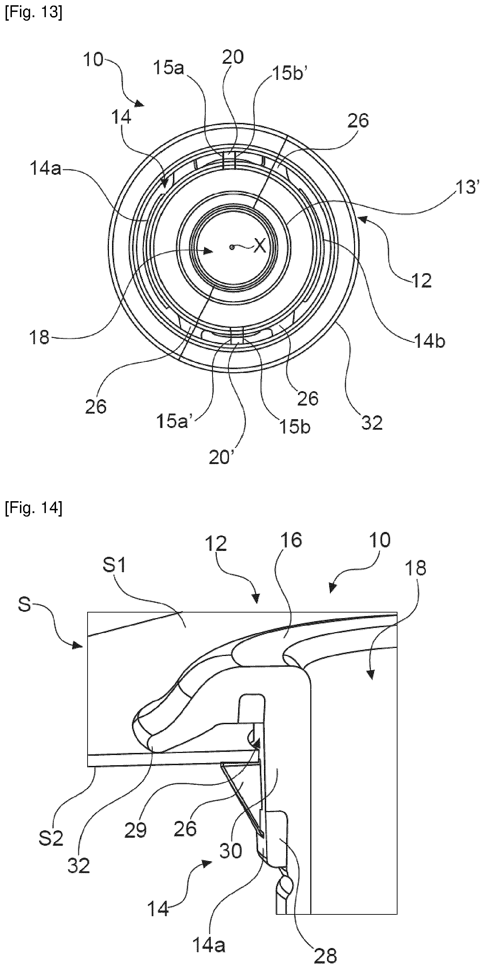

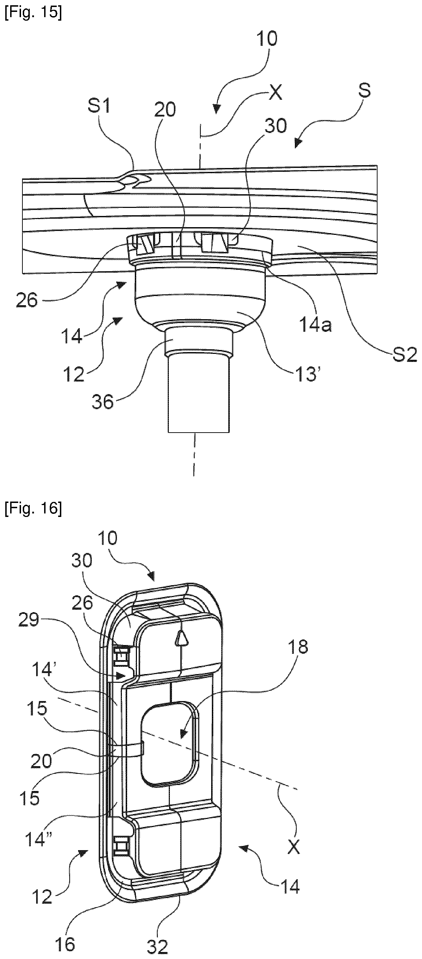

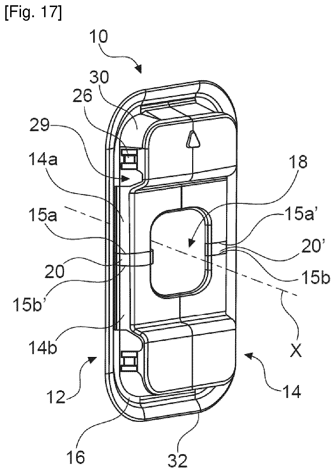

Dans ce qui suit, il est décrit de manière non limitative un passe-cloison 10 pour au moins un câble et/ou tuyau. Différentes formes de réalisation du passe-cloison 10 selon l'invention sont représentées sur les figures 1 à 17. Le passe-cloison 10 selon l'invention comporte un support 12 à base élastomère et un contre-support 14 plus rigide que le support 12.

Le support 12 comprend un plateau 16 qui est muni d'un orifice 18 de passage pour au moins un câble et/ou tuyau. On comprend que l'orifice 18 de passage s'étend dans le plan du plateau 16. De préférence, l'orifice 18 de passage est positionné au centre géométrique du plateau 16.

Le support 12 est à base élastomère qui peut être en un matériau choisi, de manière non limitative, parmi l'éthylène-propylène-diène monomère (EPDM), le styrène-butadiène (SBR), le butadiène-acrylonitrile (NBR), l'isobutylène-isoprène (IIR) ou encore le caoutchouc naturel (NR), un matériau thermoplastique élastomère (TPE) ou un matériau thermoplastique élastomère vulcanisé (TPV) comme le polypropylène/éthylène-propylène-diène monomère (PP/EPDM), le polyamide/éthylène-propylène-diène monomère (PA/EPDM), le polypropylène/styrène-éthylène/butylène-styrène (PP/SEBS) ou le polypropylène/styrène-butadiène-styrène. On comprend qu'il possède une certaine souplesse et flexibilité. De la sorte, le support 12 est apte à se déformer et à retrouver sa forme initiale après l'effort exercé dessus.

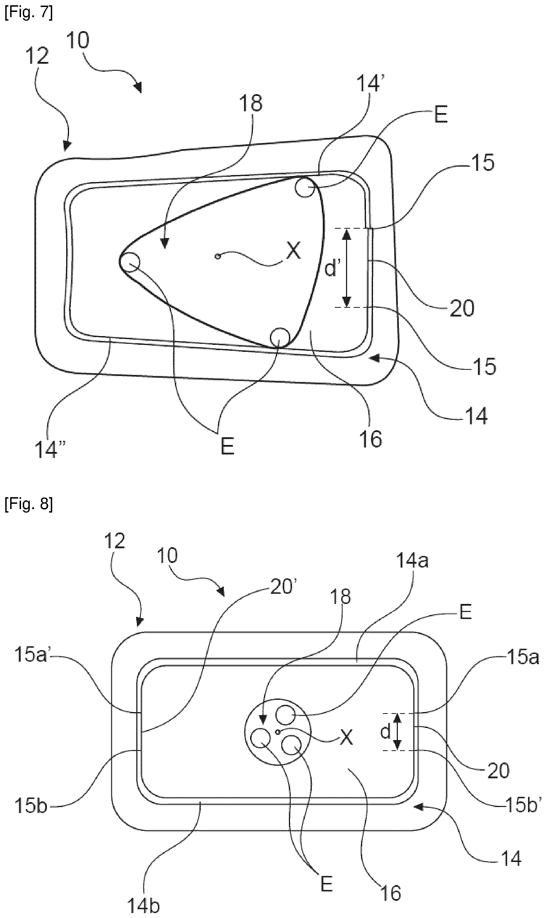

Avantageusement, le plateau 16 du support 12 comporte au moins une lèvre périphérique 32. Cette lèvre périphérique 32 est en outre destinée à prendre appui sur une surface S1, S2 d'une cloison S, externe au passe-cloison 10, comme visible sur la figure 8 par exemple. En utilisation, cette lèvre périphérique 32 est configurée pour assurer l'étanchéité autour de la lumière ménagée dans la cloison S pour l'installation du passe-cloison 10. La lèvre 32 en appui sur la surface S1, par exemple, permet également de maintenir une pression de contact homogène sur un organe de clipsage 26 tel que décrit plus loin dans ce qui suit.

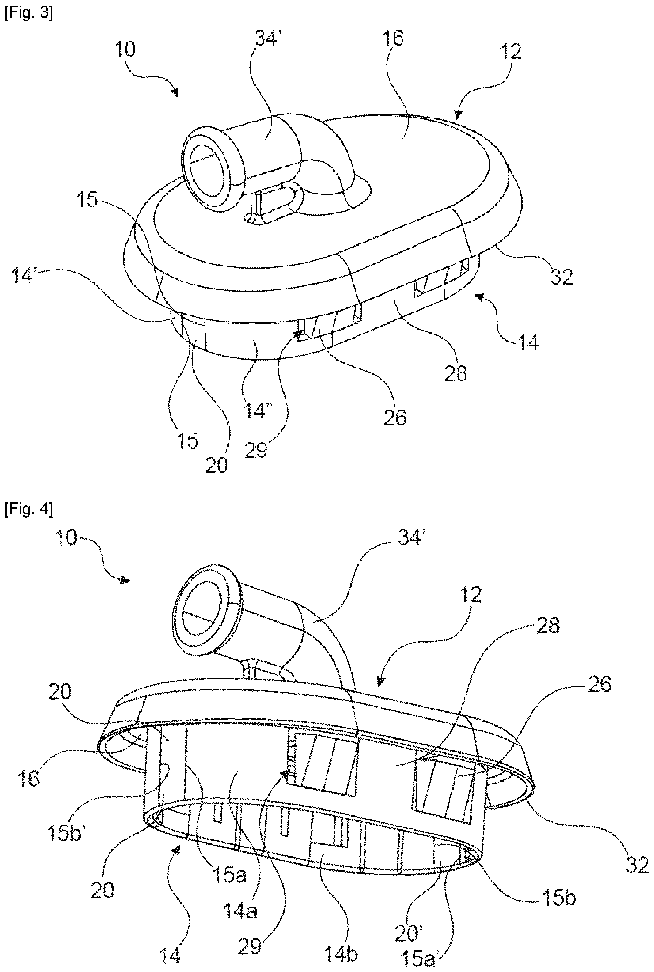

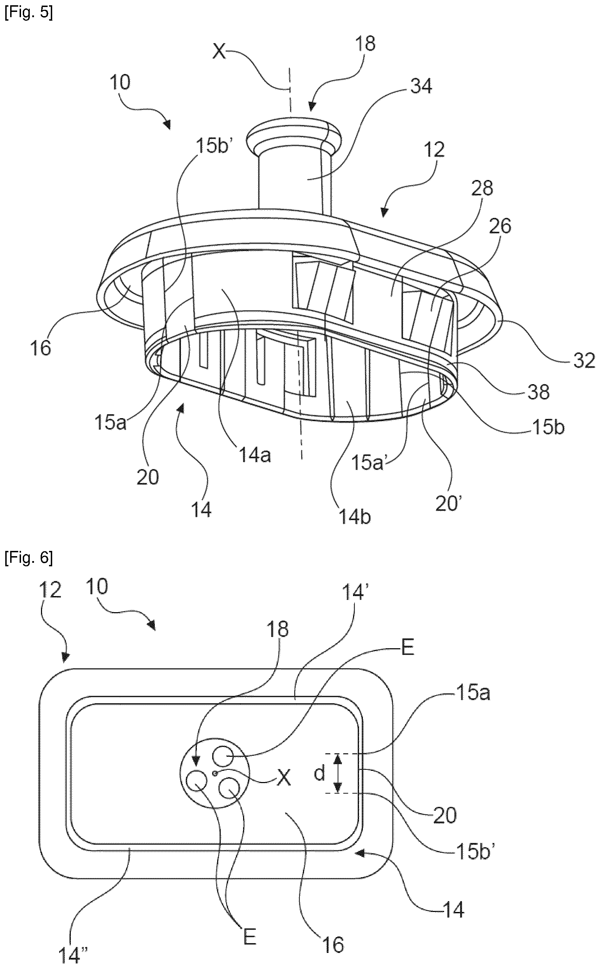

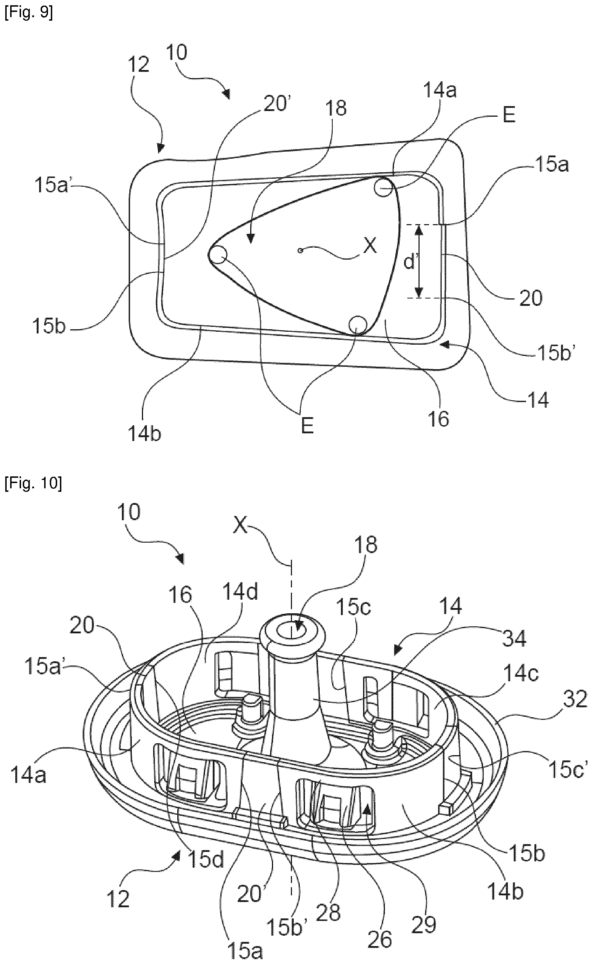

Le support 12 peut comprendre également au moins un col 34, 34', 36 pour le maintien du câble et/ou tuyau. En référence aux figures 1 à 5, le col 34, 34' peut s'étendre en saillie depuis le plateau 16, en particulier dans le prolongement de l'orifice 18. Chaque col 34 peut s'étendre, en référence aux figure 1, 5, 10 et 11, selon une direction X sensiblement perpendiculaire au plateau 16. En référence à la figure 10, ce col 34 peut être orienté du côté du plateau 16 depuis lequel s'étend le contre-support 14, comme décrit ci-après. En alternative, le col 34 peut aussi être orienté du côté du plateau 16 opposé au côté depuis lequel s'étend le contre-support 14, comme représenté sur les figures 1 et 5. Avantageusement, le col 34 est configuré pour se retourner, c'est-à-dire que le col 34 est apte à passer de l'état de la figure 1 à celui de la figure 10 et inversement. Autrement dit, le col 34 peut être orienté d'un côté ou de l'autre du plateau 16. En variante, le col 34' peut présenter un coude comme visible sur les figures 3 et 4 et partiellement visible sur la figure 2.

Le contre-support 14 est plus rigide que le support 12 à base élastomère. Le contre-support 14 s'étend à partir du plateau 16 du support 12 selon une direction X sensiblement perpendiculaire au plateau 16. Le contre-support 14 est en outre agencé autour de l'orifice 18 de passage. Le contre-support 14 se présente sous la forme d'au moins deux parties 14', 14", 14a-14d s'étendant à partir du plateau 16 selon la direction X. Chacune des parties 14', 14", 14a-14d présente en outre au moins une extrémité latérale 15, 15a, 15a', 15b, 15b', 15c, 15c', 15d, 15d'. Cette extrémité latérale 15, 15a, 15a', 15b, 15b', 15c, 15c', 15d, 15d' est reliée à l'extrémité latérale 15, 15a, 15a', 15b, 15b', 15c, 15c', 15d, 15d' qui lui est la plus proche d'une autre partie 14', 14", 14a-14d du contre-support 14 par une languette 20, 20' appartenant au support 12.

En référence aux figures 1 à 3 et 16, le contre-support 14 peut se présenter sous la forme d'une seule pièce. On comprend alors que cette unique pièce implique que la partie 14' est venue de matière avec la partie 14". Les deux parties 14', 14" sont en outre agencées en vis-à-vis. Dans ces exemples, chaque partie 14', 14" comporte une extrémité latérale 15 qui fait face à une extrémité latérale 15 de l'autre des parties 14', 14". Autrement dit, le contre-support 14 présente deux extrémités latérales 15 qui se font face ; l'extrémité latérale 15 de la partie 14' étant l'extrémité la plus proche de l'extrémité latérale 15 de la partie 14". Ces deux extrémités latérales 15 sont reliées l'une à l'autre par une languette 20 qui appartient au support 12.

En référence aux figures 4, 5 et 10 à 13, le contre-support 14 peut également se présenter sous la forme d'au moins deux parties 14a-14d distinctes les unes des autres. Ces parties 14a-14d distinctes s'étendent à partir du plateau 16 du support 12 selon la direction X et sont globalement agencées autour de l'orifice 18 de passage. Chacune des parties 14a-14d distinctes présente ainsi deux extrémités latérales 15a-15d, 15a'-15d'. On comprend que l'on a deux extrémités latérales 15a-15d, 15a'-15d' par partie 14a-14d car ces parties 14a-14d sont distinctes les unes des autres. On comprend également que les extrémités latérales 15a-15d, 15a'-15d' peuvent s'étendre selon la direction X. Par ailleurs, une extrémité latérale 15a-15d, 15a'-15d' de chacune des parties 14a-14d du contre-support 14 est reliée à l'extrémité latérale 15a-15d, 15a'-15d' qui lui est la plus proche d'une autre de partie 14a-14d du contre-support 14 par une languette 20, 20' appartenant au support 12.

Par exemple, le contre-support 14 des formes de réalisation des figures 4, 5, 12 et 17 comprend deux parties 14a ,14b distinctes. Dans ce cas, une languette 20 relie l'extrémité latérale 15a de la première partie 14a du contre-support 14 à l'extrémité latérale 15b' de la seconde partie 14b du contre-support 14, cette extrémité latérale 15b' étant la plus proche de l'extrémité latérale 15a. De manière similaire, une languette 20' relie l'extrémité latérale 15a' de la première partie 14a du contre-support 14 à l'extrémité latérale 15b de la seconde partie 14b du contre-support 14, cette extrémité latérale 15b étant la plus proche de l'extrémité latérale 15a'.

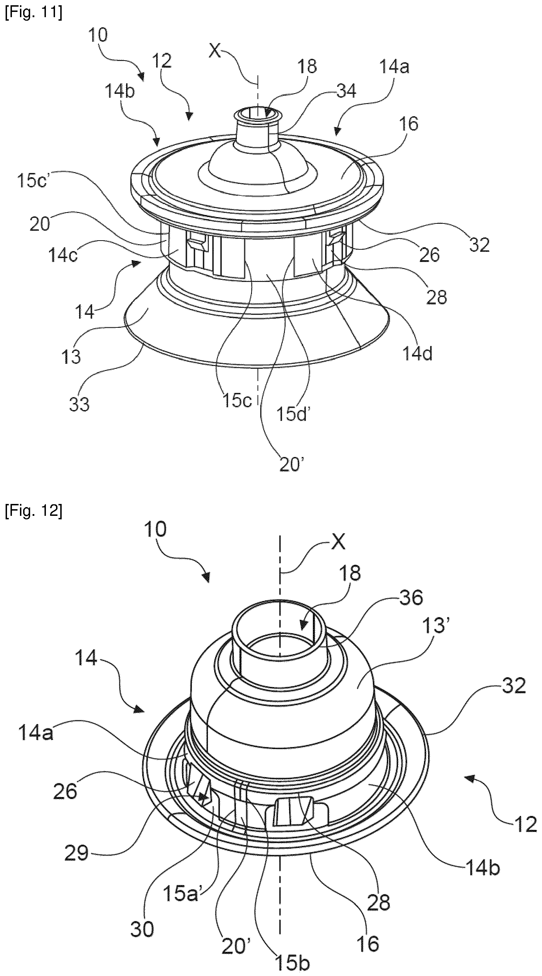

Dans d'autres formes de réalisation, représentées sur les figures 10 et 11, le contre-support 14 comprend quatre parties 14a-14d distinctes. Dans un tel cas, une première languette 20' relie l'extrémité latérale 15a de la première partie 14a du contre-support 14 à l'extrémité latérale 15b' de la deuxième partie 14b du contre-support 14. Une deuxième languette 20 relie l'extrémité latérale 15b de la deuxième partie 14b à l'extrémité latérale 15c' de la troisième partie 14c. Une troisième languette 20' relie l'extrémité latérale 15c de la troisième partie 14c à l'extrémité latérale 15d' de la quatrième partie 14d. Et, une quatrième languette 20 relie l'extrémité latérale 15d de la quatrième partie 14d à l'extrémité latérale 15a' de la première partie 14a du contre-support 14.

Le contre-support 14 peut être en un matériau thermoplastique pris de manière non limitative parmi le polypropylène (PP), le polyamide (PA) ou le polyoxyméthylène (POM), ou un matériau thermoplastique vulcanisé. Le matériau thermoplastique ou thermoplastique vulcanisé peut être fortement chargé, par exemple de fibres de verre, de fibre de carbone, de craie ou de talc. La charge de fibres de verre, fibres de carbone, craie ou talc peut s'élever jusqu'à 40%. Les différents matériaux précités sont choisi de sorte à être plus rigides que le matériau du support 12.

La rigidité du contre-support 14 est recherchée pour assurer une protection mécanique des éléments passant à travers le passe-cloison 10 contre les interfaces d'une cloison. En outre, cette rigidité favorise l'installation et le maintien du passe-cloison 10 dans la lumière de la cloison prévue à cet effet.

Le contre-support 14, et donc chaque partie 14a-14d, est situé dans le prolongement axial du support 12 et peut comprendre une extrémité libre comme représentée sur les figures 1 à 5 et 10.

Avantageusement, le contre-support 14 est surmoulé sur le support 12, par exemple par adhérisation, ou bien le support 12 et le contre-support 14 sont réalisés par un procédé de bi-injection. Cela permet une meilleure liaison entre le support 12 et le contre-support 14, améliorant l'étanchéité entre ces deux éléments. On comprend que le passe-cloison 10 est bi-matière, c'est-à-dire que le passe-cloison 10, qui est d'une seule pièce, comporte au moins deux types de matériaux aux caractéristiques différentes. Autrement dit, le support 12 et le contre-support 14 du passe-cloison 10 sont liés entre eux par adhésion chimique. Il en est donc de même entre les languettes 20 et les extrémités latérales 15a-15d, 15a'-15d' des parties 14a-14d distinctes du contre-support 14.

Afin d'améliorer la liaison entre le support 12 et le contre-support 14, les matériaux du support 12 et du contre-support 14 peuvent être choisis de sorte à avoir une base thermoplastique similaire. Par exemple, le couple de matériaux choisi peut être PP/TPV(PP/EPDM), PA/TPV(PA/EPDM) ou encore PP/TPE(PP/EPDM).

En alternative, un adhésif rapporté peut être utilisé pour lier le support 12 et le contre-support 14.

Les figures 6 et 7 montrent de manière très schématique l'étirement du passe-cloison 10 dans le cas où le contre-support 14 se présente sous la forme d'une pièce unique, et représenté par les exemples des figures 1 à 3. Cet étirement du passe-cloison 10 entraîne la déformation de la languette 20 appartenant au support 12, cette languette 20 reliant les deux parties 14', 14' du contre-support 14.

La figure 6 montre en particulier le passe-cloison 10 dans un état dit initial, c'est-à-dire lorsque le passe-cloison 10 ne subit pas de sollicitation. Dans cet exemple, le passe-cloison 10 comporte une languette 20 qui relie les extrémités latérales 15 de chacune des parties 14', 14" l'une à l'autre. Dans cet état initial, la languette 20 présente une dimension d qui est égale à la distance séparant les extrémités latérales 15 respectives des deux parties 14', 14" du contre-support 14.

La figure 7 montre le passe-cloison 10 dans un état sollicité, c'est-à-dire lorsque le support 12 est étiré en vue de faire passer au moins un câble et/ou tuyau par l'orifice 18 de passage, lui-même étiré au moyen d'écarteurs E. Les écarteurs E introduits dans l'orifice 18 en s'éloignant les uns des autres étirent le support 12 et entraînent l'écartement des parties 14', 14", tandis que la languette 20 se déforme pour présenter une dimension d' supérieure à la dimension d identifiée dans l'état initial. Cela traduit un étirement de la languette 20. L'écartement des parties 14', 14" l'une de l'autre permet d'agrandir la zone de passage sans être limité par les dimensions du contre-support 14.

Dans un tel cas, c'est l'élasticité relative de la portion du contre-support 14 qui est opposée à la languette 20, par rapport à l'orifice 18, qui limite l'écartement possible. En effet, le contre-support 14 étant en un matériau avec une rigidité donnée, les contraintes exercées dessus ne doivent pas l'endommager.

Les figures 8 et 9 montrent de manière très schématique l'étirement du passe-cloison 10 dans le cas où le contre-support 14 se présente sous la forme de deux parties 14a, 14b distinctes, et représenté par les exemples des figures 4, 5 et 12. Cet étirement du passe-cloison 10 entraîne la déformation d'au moins une languette 20 appartenant au support 12, cette languette 20 reliant deux parties 14a, 14b distinctes du contre-support 14.

La figure 8 montre en particulier le passe-cloison 10 dans un état dit initial, c'est-à-dire lorsque le passe-cloison 10 ne subit pas de sollicitation. Dans cet exemple, le passe-cloison 10 comporte une première languette 20 qui relie l'extrémité latérale 15a de la première partie 14a du contre-support 14 à l'extrémité latérale 15b' de la seconde partie 14b du contre-support 14. De manière similaire, une deuxième languette 20' relie l'extrémité latérale 15a' de la première partie 14a du contre-support 14 à l'extrémité latérale 15b de la seconde partie 14b du contre-support 14. Dans cet état initial, la languette 20 présente une dimension d qui est égale à la distance séparant les extrémités latérales 15a, 15b' respectives de la première et de la seconde partie 14a, 14b du contre-support 14.

La figure 9 montre le passe-cloison 10 dans un état sollicité, c'est-à-dire lorsque le support 12 est étiré en vue de faire passer au moins un câble et/ou tuyau par l'orifice 18 de passage, lui-même étiré. Dans cet état, les première et seconde parties 14a, 14b sont écartées l'une de l'autre, du fait de l'étirement du support 12, tandis que la languette 20 se déforme pour présenter une dimension d' supérieure à la dimension d identifiée dans l'état initial. Cela traduit un étirement de la languette 20. L'écartement des première et seconde parties 14a, 14b permet d'agrandir la zone de passage sans être limité par les dimensions du contre-support 14.

Dans ce cas décrit ci-dessus, la deuxième languette 20' est, comme la première languette 20, apte à se déformer, et est située de préférence à l'opposé de la première languette par rapport à l'orifice 18. On s'affranchit ainsi des contraintes évoquées précédemment dans l'exemple des figures 6 et 7.

Dans ces exemples, chaque languette 20, 20', en reliant les extrémités latérales 15 des parties 14', 14" ou les extrémités latérales 15a, 15a', 15b, 15b' des parties 14a, 14b depuis le plateau 16, permet également de garantir une étanchéité entre elles, c'est-à-dire entre les parties 14', 14" ou entre les différentes parties 14a, 14b distinctes du contre-support 14. Cette propriété est également vérifiée pour les autres formes de réalisations représentées sur les figures 10 à 17.

En variante, une bande annulaire 38, représentée sur la figure 5, peut s'étendre autour du contre-support 14. Cette bande 38 relie en outre chaque languette 20. On comprend donc que cette bande 38 appartient également au support 12 et est donc réalisée dans le même matériau que le support 12. Cette bande annulaire 38 permet d'augmenter la surface de contact entre le support 12 à base élastomère et le contre-support 14 et favorise ainsi la liaison entre eux.

Le contre-support 14 peut comporter au moins deux organes de clipsage 26 s'étendant en saillie depuis une paroi radialement externe 28 du contre-support 14. De préférence, un organe de clipsage 26 est positionné symétriquement à un autre organe de clipsage 26 par rapport à l'orifice 18. En particulier, chaque partie 14a-14d distincte du contre-support 14 peut comporter au moins un organe de clipsage 26. Dans certaines formes de réalisation, par exemple celles représentées sur les figures 4, 5, ou 12-13, une ou chaque partie 14a-14d peut comporter deux organes de clipsage 26.

L'organe de clipsage 26 peut être logé dans une ouverture 29 ménagée dans la paroi radialement externe 28. Cette ouverture 29 permet à l'organe de clipsage 26 de légèrement se déplacer radialement lors de l'installation du passe-cloison 10. Ce déplacement se manifeste par exemple par une flexion de l'organe de clipsage 26.

Dans certains cas, le contre-support 14, et en particulier les organes de clipsage 26, peut être exposé à des contraintes environnementales, sources de fluides, de poussière, de chaleur/froid ou de bruit. Aussi, pour éviter que des fluides, poussières ou autres ne passent par l'ouverture 29, une membrane 30 appartenant au support 12 remplit avantageusement l'ouverture 29 ménagée dans la paroi radialement externe 28, comme illustré sur les figures 12 à 17. La membrane 30 assure ainsi l'étanchéité entre l'extérieur du passe-cloison 10 et le passage interne par lequel passe le câble et/ou tuyau. Cette membrane 30, appartenant au support 12 à base élastomère, est apte à se déformer pour permettre le léger déplacement radial de l'organe de clipsage 26 lors de l'installation du passe-cloison 10 dans la cloison S.

Dans l'exemple représenté sur la figure 11, le contre-support 14 est situé, selon la direction X, entre le plateau 16 du support 12 à base élastomère et une jupe 13 tronconique, appartenant au support 12. La jupe 13 peut en outre s'étendre autour de l'orifice 18 de passage. La jupe 13 comporte une extrémité libre définissant une lèvre 33. Cette lèvre 33 est en outre destinée à prendre appui sur une surface S1, S2 d'une cloison S, externe au passe-cloison 10. La jupe 13 est en outre conçue pour se retourner lors de l'installation du passe-cloison 10 de sorte que la lèvre 33 de la jupe 13 prenne appui sur la surface S1, S2 de la cloison S.

Dans l'exemple représenté sur les figures 12 à 15, le contre-support 14 est situé, selon la direction X, entre le plateau 16 du support 12 et un renflement 13' en forme de demi-tonneau, appartenant au support 12. Le renflement peut en outre s'étendre autour de l'orifice 18. Ce renflement 13' peut comprendre un col 36 pour le maintien d'un câble et/ou tuyau, qui s'étend depuis une extrémité libre du renflement 13'. En outre, ce renflement 13' permet de couvrir des tolérances de positionnement du câble et/ou tuyau. C'est-à-dire que le câble et/ou tuyau peut être dans une position qui n'est pas nécessairement orientée selon une direction perpendiculaire au plateau 16. Il peut y avoir une certaine amplitude par rapport à cette direction.

L'invention concerne également un procédé d'installation d'au moins un câble et/ou tuyau dans le passe-cloison 10 tel que décrit dans ce qui précède dans une cloison S séparant deux compartiments d'une structure par exemple un habitacle d'un espace moteur d'un véhicule automobile.

Ce procédé d'installation comporte les étapes suivantes :
- étirer le support 12 de sorte à écarter les parties 14', 14", 14a-14d du contre-support 14 les unes des autres,
- insérer au moins un câble et/ou tuyau à travers l'orifice 18 de passage du support 12,
- refermer le support 12 à base élastomère puis
- installer le passe-cloison 10, muni du câble et/ou tuyau dans la lumière de la cloison S prévue à cet effet.

En référence aux figures 6 à 9, le support 12 peut par exemple être étiré au moyen d'écarteurs E. Ces écarteurs E sont introduits dans l'orifice 18 puis écartés radialement les uns des autres. L'orifice 18 est ainsi agrandi et le support 12 étiré. Ainsi, lorsque le support 12 à base élastomère est étiré, les parties 14', 14", 14a-14d du contre-support 14 s'écartent les unes des autres du fait qu'elles sont reliées au support 12 au niveau du plateau 16. Dans cet état sollicité, la zone de passage définie par le contre-support 14 est alors plus grande que la zone de passage dans l'état initial, permettant ainsi le passage d'éléments du câble et/ou tuyau qui ont des dimensions supérieures à cette de zone de passage prise dans l'état initial. Ces éléments peuvent par exemple être des connecteurs dans le cas d'un câble.

Le câble et/ou tuyau est inséré à travers la zone de passage définie par le contre-support 14 dans cet état sollicité et à travers l'orifice 18 de passage du support 12, sans sens de passage prédéfini. Le câble et/ou tuyau est alors maintenu en place dans la passe-cloison 10 par le col 34, 36 lorsque celui-ci est présent.

Une fois le câble et/ou tuyau inséré à travers l'orifice 18 de passage, le support 12 à base élastomère est refermé sur le câble et/ou tuyau. On comprend que les écarteurs E, lorsqu'utilisés, sont retirés de sorte que l'orifice 18 de passage reprenne sensiblement ses dimensions initiales.

Après la fermeture du support 12 sur le câble et/ou tuyau, un ruban peut être enrouler autour du câble et/ou tuyau et d'au moins une partie du support 12. On comprend que le câble et/ou tuyau et la partie du support sont pris ensemble dans le ruban. Ce ruban peut par exemple être un ruban adhésif. Cette étape est de préférence réalisée avant l'étape d'installation du passe-cloison 10 décrite ci-après. Cette étape d'enrubannage permet d'éviter au câble et/ou tuyau de coulisser et garantit également l'étanchéité entre les différents câbles et/ou tuyaux.

Le passe-cloison 10, muni du câble et/ou tuyau, est ensuite installé dans la lumière de la cloison S prévue à cet effet. Pour ce faire, le contre-support 14 est inséré de préférence à force dans la lumière de la cloison S.

Lorsque le contre-support 14 comporte des organes de clipsage 26, ces derniers, une fois passés par la lumière, forment une retenue axiale du passe-cloison 10, rendant difficile son retrait, en prenant appui sur une surface S2 de la cloison S. Cette retenue peut être améliorée grâce à la lèvre périphérique 32 du plateau 16 qui, lorsque présente, vient prendre appui sur une surface S1 de la cloison S, comme montré sur la figure 8. La lèvre 32 permettant également d'améliorer l'étanchéité au niveau de la surface S1.

Lorsque le support 12 comporte une jupe 13 tronconique (figure 5), cette dernière se retourne en passant par la lumière de la cloison S de sorte que la lèvre 33 se trouvant à l'extrémité libre de la jupe 13 vienne prendre appui, en complément des organes de clipsage 26 sur la surface S2 de la cloison S. De la sorte, le maintien et l'étanchéité du passe-cloison 10 peuvent être améliorés au niveau de la surface S2.

Il apparaît clairement à la lumière de ce qui a été décrit précédemment qu'un passe-cloison 10 selon l'invention permet d'améliorer l'écartement des différentes parties du contre-support. En effet, la ou les languettes reliant les extrémités latérales d'une des parties du contre-support avec une autre des parties sont aptes à se déformer avec l'étirement du support et ainsi entraîner le déplacement d'au moins une des parties du contre-support par rapport à une autre. De la sorte, la zone de passage définie par le contre-support, plus rigide que le support, peut être agrandie pour le passage d'un élément dont les dimensions sont sensiblement supérieures à celles du contre-support pris dans un état initial, c'est-à-dire un état non sollicité.

Un autre avantage est d'améliorer les performances d'isolation tant acoustique que fluidique grâce à la liaison entre, d'une part, chaque languette et les extrémités latérales des parties distinctes du contre-support et, d'autre part, lorsqu'elles sont présentes, chaque membrane sur laquelle prend appui chaque organe de clipsage.

## Revendications

1. Passe-cloison (10) pour au moins un câble et/ou tuyau comportant :
- un support (12) à base élastomère comprenant un plateau (16) qui est muni d'un orifice (18) de passage pour ledit au moins un câble et/ou tuyau ; et
- un contre-support (14), plus rigide que le support, se présentant sous la forme d'au moins deux parties (14', 14" ; 14a, 14b, 14c, 14d) s'étendant à partir du plateau (16) du support (12) selon une direction (X) sensiblement perpendiculaire audit plateau (16) et agencées autour de l'orifice de passage, chacune desdites parties présentant au moins une extrémité latérale (15 ; 15a, 15a', 15b, 15b', 15c, 15c', 15d, 15d'), qui est reliée à l'extrémité latérale qui lui est la plus proche d'une autre partie du contre-support par une languette (20, 20') appartenant au support (12).

2. Passe-cloison (10) selon la revendication 1, dans lequel lesdites au moins deux parties (14a, 14b, 14c, 14d) du contre-support sont distinctes les unes des autres, chacune desdites parties distinctes présentant ainsi deux extrémités latérales (15a, 15a', 15b, 15b', 15c, 15c', 15d, 15d'), chacune de ces deux extrémités latérales étant reliée à l'extrémité latérale qui lui est la plus proche d'une autre partie du contre-support par une languette (20, 20').

3. Passe-cloison (10) selon la revendication 1, dans lequel le contre-support (14) se présente sous la forme d'une seule pièce.

4. Passe-cloison (10) selon l'une quelconque des revendications 1 à 3, dans lequel le contre-support (14) comporte au moins deux organes de clipsage (26) s'étendant en saillie depuis une paroi radialement externe (28) du contre-support, ledit organe de clipsage étant logé dans une ouverture (29) ménagée dans ladite paroi radialement externe (28).

5. Passe-cloison (10) selon la revendication 2, dans lequel chaque partie (14a, 14b, 14c, 14d) distincte du contre-support (14) comporte au moins un organe de clipsage (26) s'étendant en saillie depuis une paroi radialement externe (28) de ladite partie (14a, 14b, 14c, 14d), ledit organe de clipsage étant logé dans une ouverture (29) ménagée dans la paroi radialement externe (28).

6. Passe-cloison (10) selon l'une quelconque des revendications 4 ou 5, dans lequel une membrane (30) appartenant au support (12) remplit ladite ouverture (29).

7. Passe-cloison (10) selon l'une quelconque des revendications 1 à 6, dans lequel le support (12) à base élastomère est en un élastomère, un matériau thermoplastique élastomère ou un matériau thermoplastique élastomère vulcanisé.

8. Passe-cloison (10) selon l'une quelconque des revendications 1 à 7, dans lequel le contre-support (14) est en un matériau thermoplastique ou un matériau thermoplastique élastomère vulcanisé.

9. Passe-cloison (10) selon l'une quelconque des revendications 1 à 8, dans lequel le plateau (16) du support (12) comporte au moins une lèvre périphérique (32) destinée à prendre appui sur une surface (S1, S2) d'une cloison (S) externe audit passe-cloison.

10. Passe-cloison (10) selon l'une quelconque des revendications 1 à 9, dans lequel le contre-support (14) est situé, selon ladite direction (X), entre le plateau (16) du support (12) et une jupe (13) tronconique appartenant au support (12), la jupe (13) tronconique, qui s'étend autour dudit orifice (18), comportant à une extrémité libre une deuxième lèvre (33) destinée à prendre appui sur une surface (S1, S2) d'une cloison (S) externe audit passe-cloison.

11. Passe-cloison (10) selon l'une quelconque des revendications 1 à 10, dans lequel le contre-support (14) est situé, selon ladite direction (X), entre le plateau (16) du support (12) et un renflement (13') en forme de demi-tonneau, le renflement (13'), qui s'étend autour dudit axe longitudinal, appartenant au support (12).

12. Passe-cloison (10) selon l'une quelconque des revendications 1 à 11, dans lequel le support (12) comporte au moins un col (34, 36) configuré pour maintenir ledit au moins un câble et/ou tuyau.

13. Passe-cloison (10) selon la revendication 12, dans lequel ledit col (34) s'étend en saillie depuis le plateau (16) selon la direction (X) sensiblement perpendiculaire audit plateau (16).

14. Passe-cloison (10) selon l'une quelconque des revendications 1 à 13, dans lequel le support (12) et le contre-support (14) sont liés entre eux par adhésion chimique.

15. Procédé (100) d'installation d'au moins un câble et/ou tuyau dans un passe cloison (10) selon l'une quelconque des revendications 1 à 14, ledit procédé comportant les étapes suivantes :
- étirer le support (12) à base élastomère de sorte à écarter les parties (14', 14" ; 14a, 14b, 14c, 14d) du contre-support (14) les unes des autres,
- insérer ledit au moins un câble et/ou tuyau au travers l'orifice (18) de passage du support,
- refermer le support à base élastomère sur ledit câble et/ou tuyau, puis
- installer le passe-cloison (10), muni dudit au moins un câble et/ou tuyau dans une lumière d'une cloison (S) prévue à cet effet.

16. Procédé (100) selon la revendication 15, comportant, après la fermeture du support mais avant l'installation du passe-cloison dans la cloison, l'étape suivante :
- enrouler un ruban autour du câble et/ou tuyau et d'au moins une partie du support (12) à base élastomère, ledit câble et/ou tuyau et ladite au moins une partie du support étant pris ensemble dans ledit ruban.
